Europäisches Patentamt

European Patent Office

Office européen des brevets

(11) Veröffentlichungsnummer: **0 181 495**
**A1**

# EUROPÄISCHE PATENTANMELDUNG

(21) Anmeldenummer: 85112769.6

(22) Anmeldetag: 09.10.85

(51) Int. Cl.⁴: **G 11 B 3/06**
**G 11 B 3/12**

(30) Priorität: 09.11.84 DE 3440999

(43) Veröffentlichungstag der Anmeldung:
21.05.86 Patentblatt 86/21

(84) Benannte Vertragsstaaten:
AT BE DE FR GB IT NL SE

(71) Anmelder: Deutsche Thomson-Brandt GmbH
Hermann-Schwer-Strasse 3
D-7730 Villingen-Schwenningen(DE)

(72) Erfinder: Kühn, Hans R.
Haydnweg 9
D-7742 St. Georgen(DE)

(54) Plattenspieler mit Mitteln zur Erfassung von Aufzeichnungs- und Abtastspurwinkel.

(57) Plattenspieler mit einem Abtaster für Schallplatten, deren vertikaler Aufzeichnungsspurwinkel α in verabredeten Grenzen liegen soll, deren absoluter Wert aber unbekannt ist. Der Abtaster besitzt einen Wandler, der Nutzsignale erzeugt und dazu elastisch gelagerte und dadurch bewegliche Abtastteile besitzt. Es sind erfindungsgemäß Mittel zur Bestimmung der Differenz α-β von Aufzeichnungsspurwinkel α und Abtastspurwinkel β vorgesehen, die eine Spannung erzeugen, die abhängig ist von der Longitudinalbewegung der bei Nutzmodulation bewegten Abtastteile und angezeigt wird und/oder eine Spurwinkelkorrektur ermöglicht. Es werden Ausführungsbeispiele für diese Mittel sowie Blockschaltbilder für die Verstärkung und Anzeige angegeben.

Fig.5

EP 0 181 495 A1

Postfach 2050  ·
7730 Villingen-Schwenningen
16. Oktober 1984
T-PA 526

0181495

1

PATENTANMELDUNG

_____

---------------------------------------------------

Plattenspieler mit Mitteln zur Erfassung von
Aufzeichungs- und Abtastspurwinkel.

---------------------------------------------------

Die Erfindung betrifft einen Plattenspieler nach dem
Oberbegriff des ersten Anspruchs.

Bekanntlich müssen Schneidsysteme und Abtastsysteme bei
der Aufnahme und bei der Wiedergabe von Schallplatten jeweils bestimmte Winkeltoleranzen hinsichtlich des vertikalen
Spurwinkels einhalten, damit eine einwandfreie Musikübertragung gewährleistet ist. Es wurde international festgelegt, daß für den Schneidstichel der Spurwinkel
$\alpha = 20^{0} - 0^{0} + 5^{0}$ und für den Abtaster der Spurwinkel
$\beta = 20^{0} \pm 5^{0}$ sein sollen.

Tatsächlich wird der Abtasterspurwinkelbereich in der Praxis
nachweislich zum Teil beträchtlich überschritten. Je größer
die Differenz zwischen den Spurwinkeln für Aufzeichnung und
Abtastung ist, umso größer sind die nichtlinearen Verzerrungen
bei der Wiedergabe. Während sich der Abtasterspurwinkel $\beta$
mit entsprechend geeichten Meßschallplatten jederzeit bestimmen
läßt, ist es völlig unmöglich, eine Aussage darüber zu machen,
welcher Aufzeichnungsspurwinkel $\alpha$ eine beliebige Musik-Schallplatte tatsächlich besitzt. Aus diesem Grunde ist es nicht möglich,
in jedem Einzelfall eine Übereinstimmung dieser beiden Spurwinkel herbeizuführen.

Postfach 2060
7730 Villingen-Schwenningen
16. Oktober 1984
T-PA 526

2

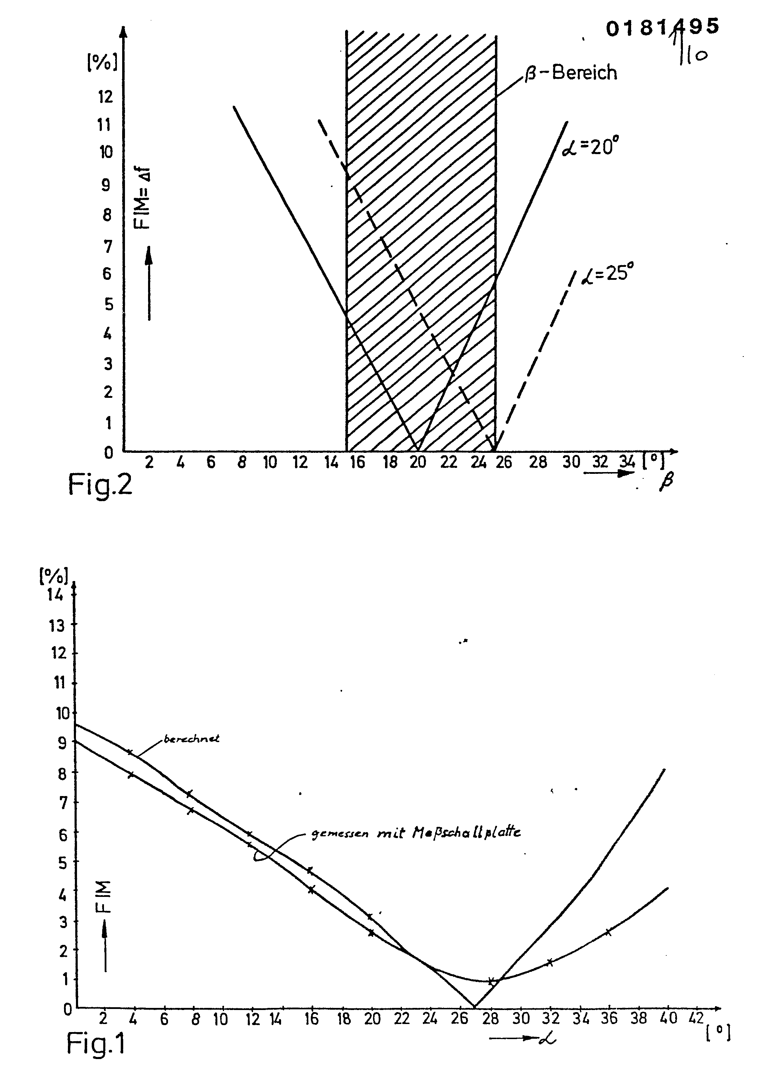

Die bei der Wiedergabe von Musikschallplatten auftretende
Abhängigkeit der nichtlinearen Verzerrungen (FIM = Frequenz-Intermodulation) vom Aufzeichnungsspurwinkel für
ein Abtastsystem mit dem vert-ikalen Spurwinkel β ist in
Figur 1 dargestellt. Unter diesen Verhältnissen würde beim
Abtasten von Schallplatten, die mit einem Winkel von
$\alpha$ = 20° aufgezeichnet wurden, bereits ein Betrag der FIM
von ca. 2,5 % auftreten. In Figur 2 wurden bei einem vorgegebenen Aufzeichnungsspurwinkel von $\alpha$ = 20° bzw. $\alpha$ = 25°
die FIM-Verhältnisse dargestellt. Der Toleranzbereich der
Abtastspurwinkel β ist in dem schraffiert dargestellten
Bereich zu sehen. Aus dieser Darstellung ist beispielsweise
zu entnehmen, daß bei durchaus realistischen Werten die
FIM auf 10,3 % ansteigt, wenn ein Abtastspurwinkel β = 15°
vorliegt und eine Schallplatte abgetastet wird, deren Aufzeichnungsspurwinkel $\alpha$ = 25° ist. Das ist aber eine unerträgliche Verschlechterung der Wiedergabequalität.

Es ist weiterhin nach dem Stand der Technik bekannt, daß
Abtastsysteme oder Tonarme in vertikaler Richtung einstellbar ausgeführt werden, um für den Bedienenden eine Korrektur
des vertikalen Abtastspurwinkels β zu ermöglichen,wie das
aus der DE-PS 220 2880 zu entnehmen ist.

Nachteilig ist jedoch hierbei, daß der jeweils aufgezeichnete Spurwinkel $\alpha$ der Schallplatten unbekannt bleibt und damit die optimale Stellung der Winkelanordnung des Abtasters
bestenfalls zufällig gefunden werden kann.

Deutsche Thomson-Brandt GmbH
Postfach 20 60
7730 Villingen-Schwenningen
0181495
16. Oktober 1984
T-PA 526

3

Aufgabe der vorliegenden Erfindung war es, eine Einstellmöglichkeit des vertikalen Spurwinkels $\beta$ unter Berücksichtigung des Aufzeichnungsspurwinkels $\alpha$ der Schallplatten am Plattenspieler zu schaffen.

Diese Aufgabe wird für den angegebenen Oberbegriff des Hauptanspruchs nach seinem Kennzeichen erfindungsgemäß gelöst. Weitere Einzelheiten und Ausgestaltungen sind den Unteransprüchen und Ausführungsbeispielen der Beschreibung zu entnehmen.

Es hat sich                          herausgestellt, daß sich die Differenz der Winkel $\alpha - \beta$ aus geringfügigen Longitudinalbewegungen der elastisch gelagerten und dadurch beweglichen Abtastteile ermitteln läßt. Die Differenz kann zur Verstellung des Abtasterspurwinkels $\beta$ derart verwendet werden, daß sich der Betrag $\alpha - \beta = 0$ als optimaler Arbeitspunkt hinsichtlich minimaler Frequenz-Intermodulation ergibt. Indem ein Wandler aus der Longitudinalbewegung eine Spannung erzeugt, ist es mit entsprechenden elektronischen Mitteln möglich, die Differenz $\alpha - \beta$ anzuzeigen und durch Veränderung des Winkels $\beta$ den optimalen Wert $\alpha - \beta = 0$ einzustellen.

Vorteilhafterweise hat sich außerdem gezeigt, daß eine statische Kraftkomponente in Longitudinalrichtung vorhanden ist, die von der Abtasterauflagekraft abhängt und zu einer Anzeige derselben benutzt werden kann.

Es hat sich ferner gezeigt, daß die Signalkomponente der Longitudinalspannung zwischen $\alpha < \beta$ und $\beta < \alpha$ einen Phasen-

Deutsche Thomson-Brandt GmbH
Postfach 20 60
7730 Villingen-Schwenningen
0181495
16. Oktober 1984
T-PA 526

4

sprung durchläuft, der den Zustand $\alpha=\beta$ charakterisiert.
Das erlaubt nunmehr $\alpha=\beta$ exakt zu identifizieren. Der
Vorteil dabei ist, daß keine Abhängigkeit von den Modulationsamplituden mehr besteht.

Gemäß einer erfindungsgemäßen Ausgestaltung läßt sich das
erreichen und für eine beruhigte Anzeige ausnutzen, indem
sowohl die Nutzspannung wie auch die Longitudinalbewegungsspannung mittels eines Bandpasses für mittlere Frequenzen
und anschließende Mittel zur Digitalisierung, z.B. mittels
Schmitt-Trigger, derart aufbereitet werden, daß durch ein
nachfolgendes Exor-Gatter eine Verknüpfung vorgenommen werden
kann. Je nach der Winkeldifferenz $\alpha-\beta$ entstehen vorteilhafterweise am Ausgang des Exor-Gatters unterschiedliche Pegel. Mit
einem nachgeschalteten Integrierglied kann bis $\alpha=\beta$ die stark
schwankende, von den Modulationsfrequenzen abhängige Anzeige
beruhigt werden.

Die Erfindung wird nachstehend an hand der Zeichnung beschrieben, die die folgenden Figuren aufweist:

Figur 1 graphische Darstellung der Abhängigkeit der FIM
(nichtlinearen Verzerrungen) vom Aufzeichnungsspurwinkel $\alpha$ bei einem Abtasterspurwinkel $\beta$ von 28°
(Stand der Technik);
Figur 2 graphische Darstellung der Abhängigkeit der FIM
von den beiden Spurwinkeln (Stand der Technik);
Figur 3 Darstellung des Zusammenhangs zwischen Aufzeichnungsspurwinkel $\alpha$ und Abtasterspurwinkel $\beta$ (Stand der Technik);
Figur 4 a und b Darstellung der Kräfteverhältnisse am Abtaster (Stand der Technik);
Figur 5 vereinfachte Darstellung eines Magnetsystems als
Ausführungsbeispiel, Schnittebene vertikal durch gedachte Längsachse;

Figur 6 Querschnitt des Systems der Figur 5 entlang P-P;

Figur 7 vereinfachte räumliche Darstellung eines Ausführungsbeispiels eines Stereo-Abtastsystems mit einem elektro-dynamischen Wandler für Longitudinalbewegungen;

Figur 8 vereinfachte räumliche Darstellung eines Ausführungsbeispiels eines Stereo-Abtastsystems mit einem piezoelektrischen Wandler für Longitudinalbewegungen;

Figur 9 Prinzipschaltung zur Anzeige des vertikalen Spurwinkels und der Auflagekraft;

Figur 10 a, b, c vereinfachtes (1 Stereo Kanal), im Längsschnitt dargestelltes, magneto-dynamisches Abtastsystem zur Erklärung der Wirkungsweise;

Figur 11 a, b, c vereinfachtes (1 Stereo Kanal), im Längsschnitt dargestelltes, magnetisches Abtastsystem zur Erklärung der Wirkungsweise;

Figur 12 a Blockschaltung für die Auswertung gemäß Figur 10 oder 11 erzeugten Spannungen;

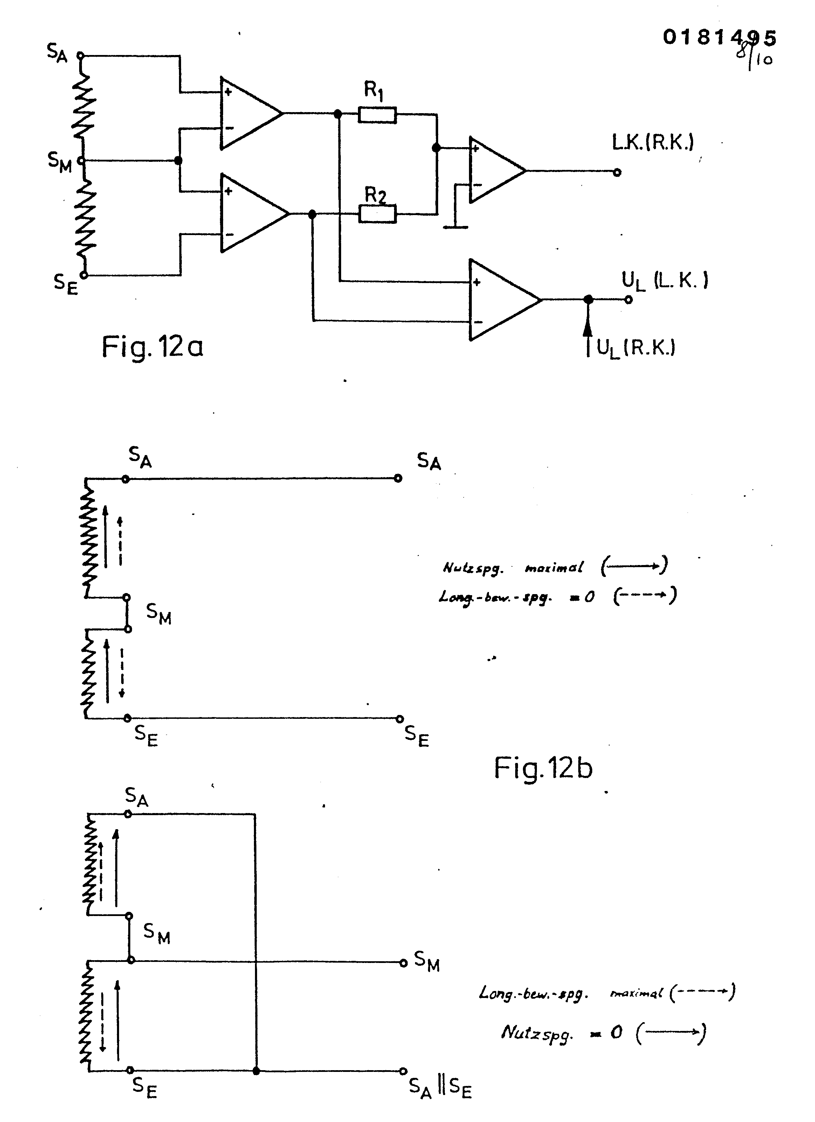

Figur 12 b Erläuterung über die Wirkungsweise der Spulen;

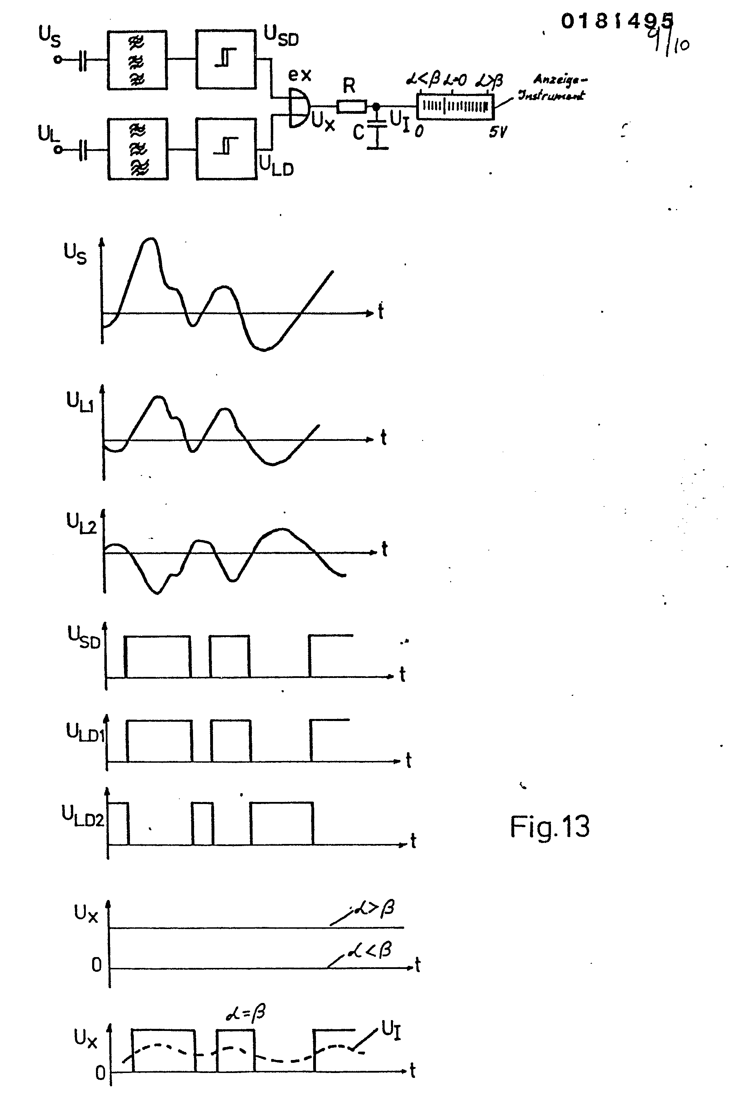

Figur 13 Prinzipschaltung zur Digitalisierung der Spannungen sowie dazugehörige Diagramme;

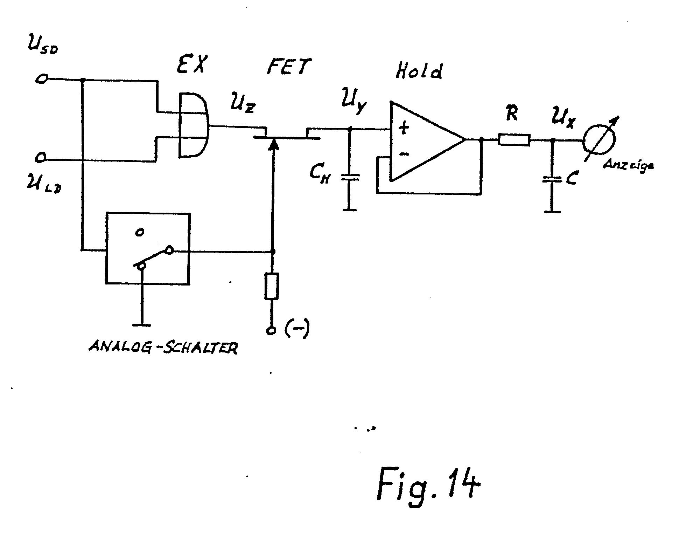

Figur 14 Verbesserung der Prinzipschaltung gemäß Figur 13 durch Einsatz einer Hold-Schaltung.


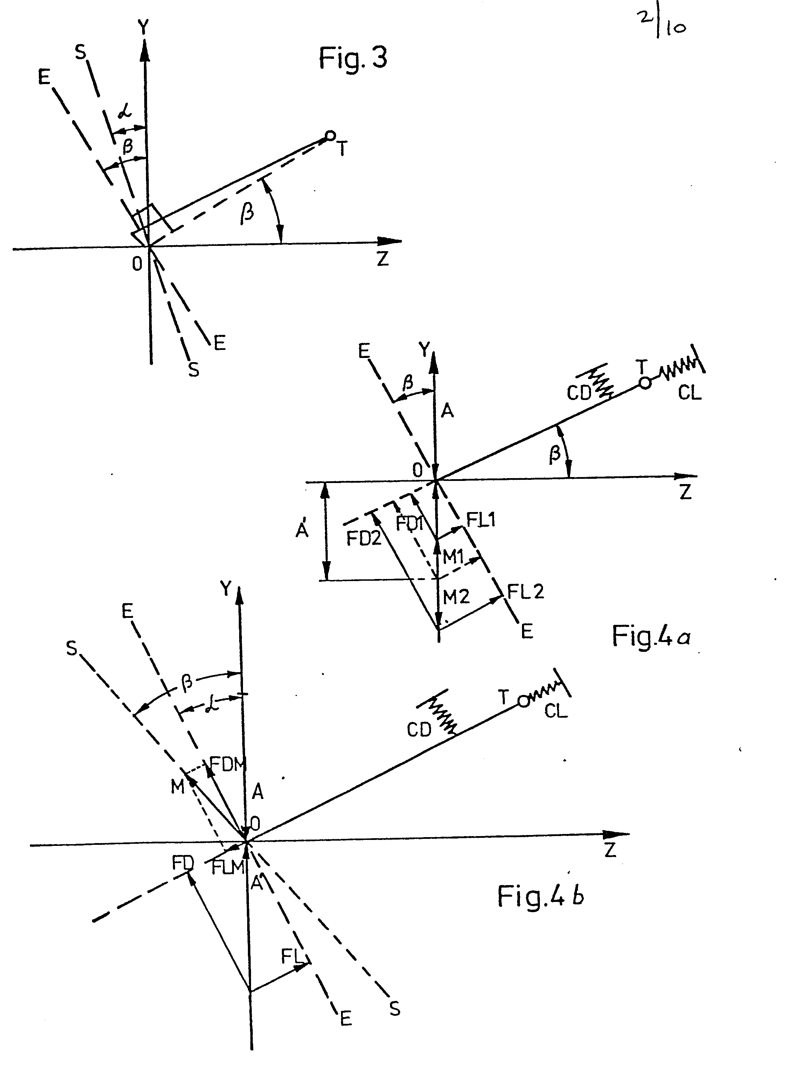

In der Beschreibungseinleitung wurde bereits auf die beiden Figuren 1 und 2 hingewiesen, aus denen die Zusammenhänge der Spurwinkel und der nichtlinearen Verzerrungen (sog. FIM = Frequenz Intermodulation) zu ersehen sind. Die Figur 3 läßt in einer Seitenansicht eines Abtasters den Zusammenhang zwischen Aufzeichnungsspurwinkel $\alpha$ und Abtastspurwinkel B deutlich werden. Die Achse Y ist die Normale auf der Schallplattenebene Z und O der Abtastpunkt. Bei Bewegung an der Abtastspitze dreht sich die bewegliche Anordnung des Abtastsystems um den Punkt T. Der Winkel TOZ ist der vertikale Abtastspurwinkel B. Seine Bewegungsrichtung E-E steht senkrecht auf OT. Die Aufzeichnungsrichtung S-S kann von der

Deutsche Thomson-Brandt GmbH
Postfach 2060
7730 Villingen-Schwenningen
16. Oktober 1984
T-PA 526

Bewegungsrichtung E-E um den Winkel $\alpha-\beta$ abweichen. Das
ist dann die Ursache für wesentlich stärkere nichtlineare
Verzerrungen (FIM), wie es den Figuren 1 und 2 zu entnehmen ist. Es gehört ebenfalls zum Stand der Technik
wie die Abtaster-Kräfteverhältnisse zusammenarbeiten.
Das wurde in den Figuren 4a und 4b dargestellt. Figur 4a
zeigt den Fall $\alpha=0$ . Die schematisch gezeichnete El-astizität CD stellt die erforderliche Rückstellkraft eines
der beiden Stereokanäle dar oder kann als resultierende
effektive Elastizität für die Drehbewegung aufgefaßt werden.
Eine andere Elastizität CL wirkt in Richtung der Achse
OT, also entsprechend der Richtung der Longitudinalbewegung.
Die Nadelspitze des Abtastsystems liegt mit einer Auflagekraft A in der Rille der Schallplatte am Punkt O. Die Gegenkraft A', die von der Rillenwand aufgebracht werden muß, ergibt eine Kraftkomponente FD, die die Drehung der Wandler-
Achse OT um T bewirkt (der Wandler ist um den Punkt T angeordnet zu denken), und eine Komponente FL in Richtung der
Achse OT. Aufgrund der El-astizität CL kann sich eine
statische Verschiebung des Punktes T gegenüber dem Wandler-
oder Abtastergehäuse ergeben, gegen das sich die Elastizitäten
CD und CL abstützen. Wird nun gleichzeitig in Y-Richtung,
verursacht durch die Modulation M1 bzw. M2 der Schallplatte,
eine Auslenkung des Abtastpunktes angenommen, ergibt sich
entsprechend auch eine Veränderung der FL-Komponente (FL 1
bzw. FL2) wie Figur 4a erkennen läßt. Der statische Verlagerung des Drehpunktes T ist also eine Modulationskomponente
in Achsrichtung OT überlagert. Die Größe dieser Modulationskomponente ist abhängig von Winkel $\beta$.

Deutsche Thomson-Brandt GmbH
Postfach 20 60
7730 Villingen-Schwenningen
**0181495**
16. Oktober 1984
T-PA 526

7·

Im Beispiel der Figur 4a fällt die Modulation, wie gesagt, mit der Y-Richtung zusammen. Das ist aber nur der Fall, wenn $\alpha = 0$. Aufgrund der festgelegten Verhältnisse

ist dies jedoch in Wirklichkeit nicht der Fall. Figur 4b zeigt deshalb die Anordnung, wenn die Modulation unter einem Winkel $\alpha$ erfolgt. Die resultierende Kraftkomponente in OT-Richtung ist abhängig von der Winkeldifferenz $\alpha - \beta$. Wenn $\alpha - \beta = 0$ ist, dann ist auch FL = 0, wenn man die statische Komponente FD bzw. FL, die von der Gegenkraft A' herrührt, nicht berücksichtigt.

Je nach Größe der Elastizität CL vollführt der Punkt T also bei $\alpha - \beta \neq 0$ eine Modulationsbewegungen in Richtung OT durch. Gegenstand der Erfindung ist es, diese Bewegung als Indikator für den anzustrebenden Fall $\alpha - \beta = 0$ zu verwenden.

Das Abtastersystem wird nach der Erfindung so ausgestaltet, daß die Longitudinalbewegung des beweglichen Abtastteils in elektrische Signale umgewandelt werden. Dies kann prinzipiell nach allen bekannten Wandlerverfahren geschehen, vorzugsweise kommen das elektro-magnetische, magneto-dynamische oder das piezoelektrische Prinzip in Frage.

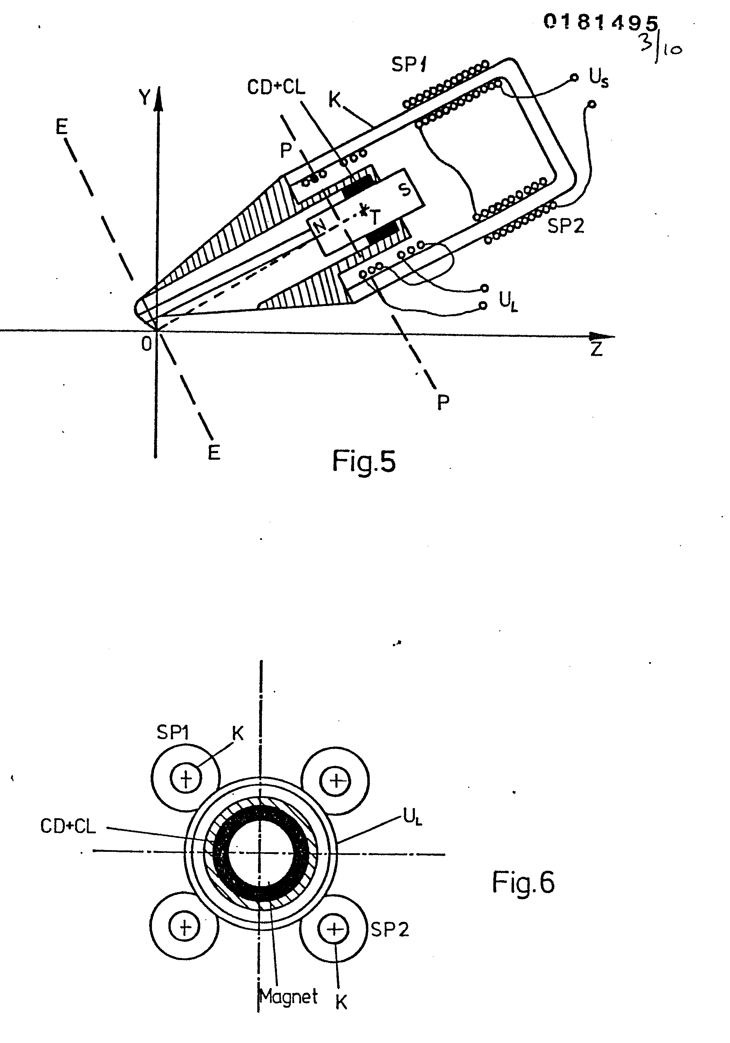

Die Figuren 5 und 6 zeigen als Ausführungsbeispiel die vereinfachte Längs- bzw. Querschnittdarstellung (nur ein Stereokanal) des Aufbaus eines Magnetsystems mit beweglich angordnetem Permanent-Magneten. Die Bewegung am Abtastpunkt O in Richtung E-E wird durch die Drehung um den Punkt T im magnetischen Kreis K und den beiden Spulen SP1

Postfach 20 50
7730 Villingen-Schwenningen

16. Oktober 1984

0181495

T-PA 526

8

und SP2 in elektrische Spannungen US umgesetzt, die nach
entsprechender Verstärkung zur Wiedergabe des einen Stereokanals dem Lautsprecher zugeführt werden. Die Longitudinalbewegungskomponenten in Richtung OT induzieren in der zusätzlichen  feststehenden Spule entsprechende Spannungen
UL und geben Aufschluß über die Winkelverhältnisse $\alpha$-$\beta$.
Unter Rückbezug auf die Figur 3 sei hier daran erinnert,
daß die Aufzeichnungsrichtung SS sich mit der Bewegungsrichtung EE deckt, wenn $\alpha$-$\beta$ = 0 ist.

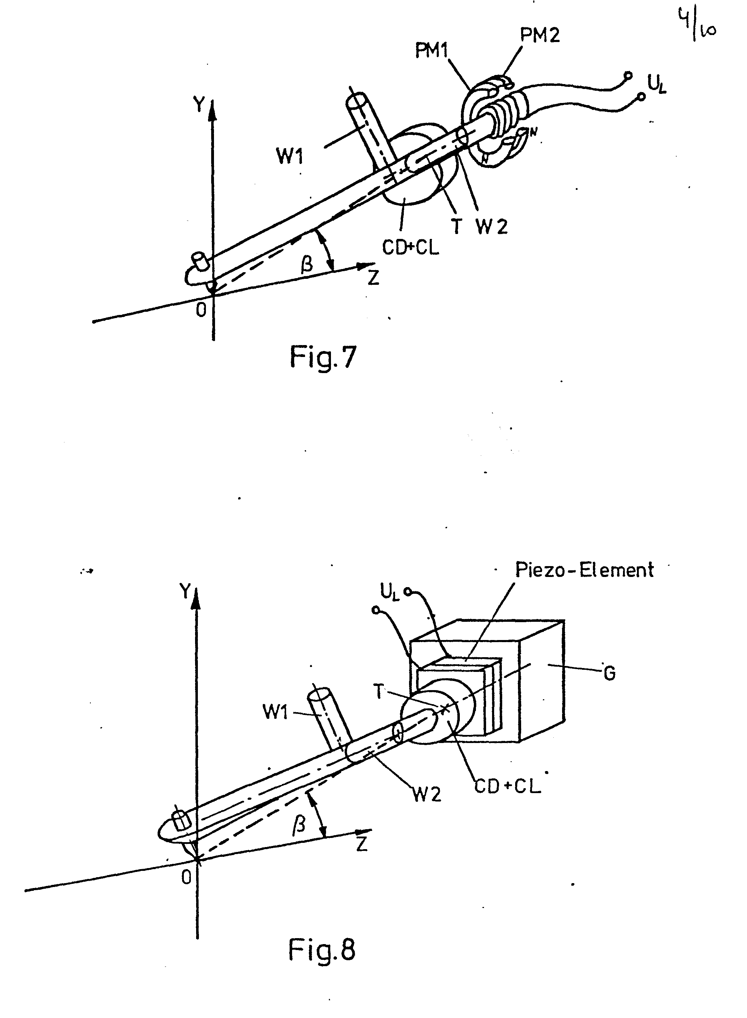

In den Figuren 7 und 8 sind  weitere Ausführungsbeispiele
der beweglichen Abtastteile ohne magnetische Kreise dargestellt, die um 90° zueinander versetzt angeordnete Wandler
W1 und W2 besitzen. In Figur 7 ist zur Bewegungsmessung in
Richtung OT eine kleine, sich mitbewegende Spule UL zwischen
zwei feststellenden Permanentmagneten PM1 und PM2 angebracht.
In Figur 8 ist zwischen den elastischen Lagern CD und CL
und dem Abtaster-Gehäuse G ein piezo-elektrischer Wandler
angeordnet. Bei beiden Beispielen (Figuren 7 und 8) entstehen
von Longitudinalbewegungen des bewegbaren Abtastteiles abhängige Spannungen UL.

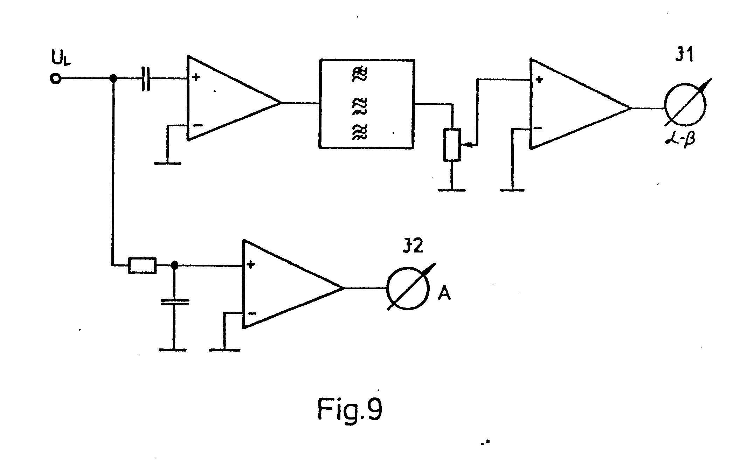

Diese Spannung UL läßt sich nach einstellbarer Verstärkung
und gegebenenfalls Frequenzgang-Korrektur mit einem Instrument I1 anzeigen. Eine entsprechende Prinzip-Schaltung zeigt
Figur 9. Das Instrument kann in Grad geeicht  sein. Damit
ist ein Maß über Winkeldifferenz $\alpha$-$\beta$ vorhanden. Der Bedienende kann bei jeder Schallplatte mittels bekannter Einstellmittel für den Abtasterwinkel die optimale Winkelgeometrie wählen bzw. bei bekanntem Abtastspurwinkel $\beta$ eines
bestimmten Abtastsystems eine Aussage darüber machen, ob

Deutsche Thomson-Brandt GmbH
Postfach 20 60
7730 Villingen-Schwenningen
16. Oktober 1984
T-PA 526

9 ·

**0181495**

die vorliegende Schallplatte noch innerhalb der vereinbarten Toleranz für den Aufzeichnungsspurwinkel $\alpha$ liegt.

Bei der Besprechung der Figuren 4a und 4b wurde bereits
erwähnt, daß die Auflagekraft eine statische Kraftkomponente
in Longitudinalrichtung liefert. In einer weiteren Ausgestaltung der Erfindung wird deshalb vorgeschlagen, bei Verwendung von amplitudenabhängig arbeitenden Wandlern, z.B.
piezo-elektrischen Wandlern, zur Erfassung der Longitudinal-
Auslenkung des bewegbaren Abtastteils die statische Komponente, die von der senkrecht auf den Abtastpunkt O wirkenden Auflagekraft herrührt, von der dynamischen Wechselkraft-
Komponente elektronisch zu trennen. Das wurde in der Schaltung der Figur 9 eingetragen. Die gewünschte Spannung wird
am Eingang UL abgegriffen und über ein RC-Glied einem Operationsverstärker zugeführt, an dessen Ausgang ein Instrument
I2 die Auflagekraft anzeigt, das z.B. in mN geeicht ist.

In weiterer Ausgestaltung des Erfindungsgedankens wird vorgeschlagen, Magnetsysteme mit zwei an sich bekannten Induktionsspulen für jeden Stereokanal so anzuordnen, daß die
Mittelanzapfung der Spulenpaare herausgeführt wird. So kann
sowohl die sogenannte Nutzspannung des Stereokanals erzeugt
werden, als auch mittels der gleichen Spulen eine der Longitudinalbewegung proportionale Spannung.

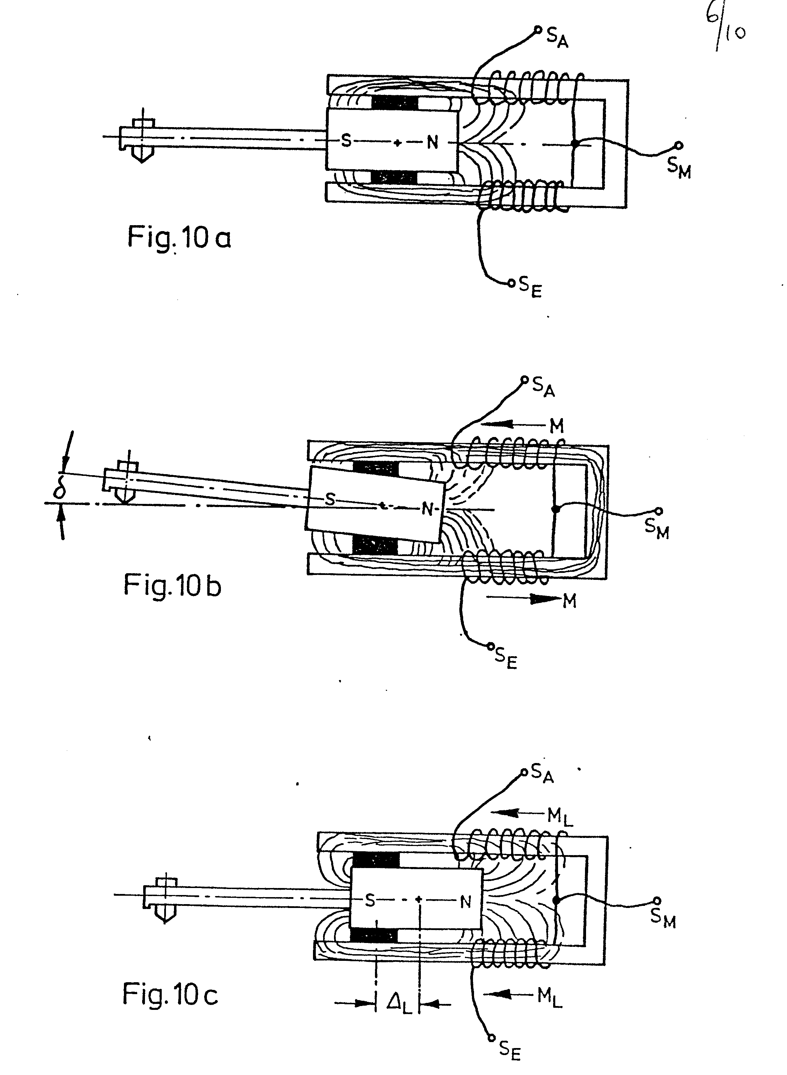

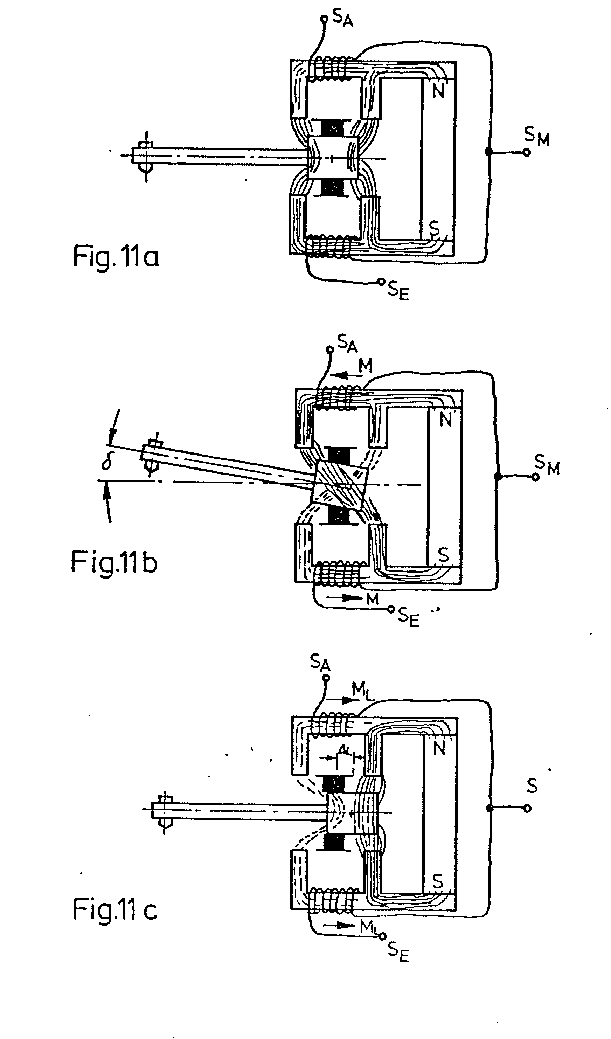

Die Figuren 10 und 11 zeigen zwei verschiedene Ausführungsbeispiele dazu. Die Wirkungsweise eines magneto-dynamischen
Systems (moving magnet) ist der Figur 10a, 10b und 10c zu
entnehmen, während die Figur 11a, 11b und 11c die Wirkungsweise eines magnetischen Systems (moving iron) darstellt. Es
wurden jeweils nur die Spulen eines Stereokanals eingezeichnet.

Postfach 2060
7730 Villingen-Schwenningen
0181495
16. Oktober 1984
T-PA 526

In Figur 10a ist die Mittellage des bewegbaren Abtastteils zu erkennen. Die magnetischen Kraftlinien durchsetzen zum Teil auch die Induktionsspulen SA/SM und SM/SE.
Eine Drehbewegung an der Abtastspitze um den Winkel $\delta$
bewirkt eine Kraftflußänderung in beiden Spulen in der
eingezeichneten Richtung M(siehe Figur 10b). Wenn eine
Longitudinalbewegung des bewegbaren Abtastteils vorliegt,
z.B. um den Betrag $\Delta L$ (stark übertrieben in Figur 10c
dargestellt), werden beide Spulen in gleicher Weise vom
magnetischen Kraftfluß durchsetzt, so daß sich ML ergibt.

In ähnlicher Weise wirkt die Anordnung nach Figur 11.
In Figur 11a ist die Ruhelage des bewegbaren Abtastteils
zu sehen. Bei Drehbewegungen um den Winkel $\delta$ (Figur 11b)
entstehen in den beiden Spulen SA/SM und SM/SE entgegengesetzte Magnetflußrichtungen, während sie bei Longitudinalbewegungen um den Betrag $\Delta L$ (Figur 11c) gleichphasig
sind. Selbstverständlich sind auch hier die Bewegungen zur
Verdeutlichung stark übertrieben dargestellt.

Aus den vorstehenden Erläuterungen ergibt sich, daß die
Nutzspannungen von den Longitudinalbewegungsspannungen getrennt werden können.

Wenn unter Berücksichtigung der Windungsrichtungen der
Spulen bei Serienschaltung der Spannungen SA/SM und SM/SE
zwischen SA und SE die Nutzspannung für den einen Stereokanal
vorliegt, ergibt sich bei Parallelschaltung der Spulen eine
der Longitudinalbewegung proportionale Spannung an (SE // SE)
/ SM. Eine entsprechende Schaltung zeigt Figur 12a. Dabei

Deutsche Thomson-Brandt GmbH
Postfach 20 30
7730 Villingen-Schwenningen
16. Oktober 1984
T-PA 526

0181495

||

sind die Spannungen UL (linker Kanal) und UL (rechter
Kanal) zusammengeschaltet, um die Empfindlichkeit zu
erhöhen. Im Prinzip könnte jedoch bereits eine der beiden
Spannungen UL zur Erzeugung der Longitudinalbewegungsspannung genügen. Das Prinzip der Erzeugung maximaler
Nutz- bzw. Longitudinalbewegungsspannungen geht aus dem
Schema der Spulen-Schaltung gemäß Figur 12b hervor.

Es wurden Überlegungen zur Verbesserung der Anzeige
$\alpha < \beta$, $\alpha = \beta$ und $\alpha > \beta$ angestellt. Insbesondere mußte die
Anzeige wesentlich beruhigt  werden. Das läßt sich in
weiterer Ausgestaltung der Erfindung dadurch erreichen,
daß eine Unabhängigkeit von überlagerten Modulationsamplituden bewirkt wird. Wie das möglich ist, zeigt die
Figur 13.   Der Aufzeichungsspurwinkel $\alpha$ kann also sowohl
größer wie auch kleiner als der Abtasterspurwinkel $\beta$ sein.
Dareus folgt, daß am Abtaster im Punkt O folgende Kraftkomponenten wirken:

K = Kraftkomponente in Longitudinal-
    richtung, OT oder TO gerichtet;
$A_M$ = Modulations-Amplitude;
P = Kraftkomponente in Drehrichtung.

Sie bilden ein am Abtastpunkt wie bekannt wirkendes
Kräfteparallelogramm. Die Phase der Komponente K ist um
$180^O$ verschieden, wenn $\alpha > \beta$ gegenüber $\beta > \alpha$, d.h. der

12.

Deutsche Thomson-Brandt GmbH
.Postfach 2060
7730 Villingen-Schwenningen

0181495

16. Oktober 1984

T-PA 526

Phasensprung bei $\alpha = \beta$ kann als Identifikation der Verhältnisse $\alpha = \beta$ herausgezogen werden. Das hat den gewünschten Vorteil, daß keine Abhängigkeit mehr von den Modulationsamplituden besteht. Sowohl die der Kraftkomponente K entsprechende Spannung $U_L$ wie auch die der Kraftkomponente P entsprechende Spannung $U_S$ werden im geeigneten Frequenzband, z.B. bei mittleren Frequenzen digitalisiert und zwar beispielsweise mittels zweier Schmitt-Trigger und über ein Exor-Gatter verknüpft. Je nach Winkeldifferenz $\alpha - \beta$ entstehen am Ausgang des Exor-Gatters unterschiedliche Pegel $U_X$. Mit einem nachgeschalteten Integrierglied (R, C) kann bei $\alpha = \beta$ die stark schwankende, von den Modulationsfrequenzen abhängige Anzeige wesentlich beruhigt werden, wie die gestrichelte Linie entsprechend der Spannung $U_I$ im untersten Diagramm der Figur 13 zeigt. In den Diagrammen sind die folgenden Spannungsverläufe eingetragen:

$U_S$ = Spannung der Nutzspule

$U_L$ = Longitudinalbewegungsspannung

$U_{L1}$ = Longitudinalbewegungsspannung, wenn $\alpha < \beta$

$U_{L2}$ = Longitudinalbewegungsspannung, wenn $\alpha > \beta$

$U_{SD}$ = digitalisierte Spannung $U_S$

$U_{SD}1$ = digitalsierte Spannung $U_{L1}$

$U_{SD2}$ = digitalisierte Spannung $U_{L2}$

$U_X$ = Ausgang des Exor-Gatters

$U_I$ = Spannung am Instrument, wenn $\alpha = \beta$

Postfach 20 60
7730 Villingen-Schwenningen
16. Oktober 1984
0181495
T-PA 526

Um eine vernünftige Anzeigeberuhigung zu bewirken, muß
die Zeitkonstante des RC-Gliedes verhältnismäßig groß
sein, wenn bei Intervall-Passagen der Schallplatte
$U_S = 0$ wird. In weiterer Ausgestaltung der Erfindung
kann das unter Zwischenschaltung einer sogenannten Hold-
Schaltung (siehe Figur 14), bestehend aus einem Analogschalter (in Form einer IC-Schaltung), einem FET
(Feldeffekt-Transistor) und einem Kondensator $C_H$ mit
einem OP (Operationsverstärker) realisiert werden. Dadurch wird die Anzeige auch unabhängig von Intervall-
Passagen mit $U_S = 0$ im Rahmen der Nutzmodulation bei
verringerter Zeitkonstante RC. Zum Verständnis der
Schaltung gemäß Figur 14 sei noch ergänzt, daß der FET
bei anliegen einer (-)-Spannung an seinem Gate geöffnet
ist. Dann ergibt sich die nachstehende Zustandstabelle:

| $U_{SD}$ | $U_{LD}$ | $U_Z$ | $U_Y$ | $U_X$ |
|----------|----------|-------|-------|-------|
| 1 | 1 | 0 | 0 | 0 |
| 1 | 0 | 1 | 1 | 1 |
| 0 | 1 | 1 | hold | hold |
| 0 | 0 | 0 | hold | hold |

Deutsche Thomson-Brandt GmbH
Postfach. 2C 60
7730 Villingen-Schwenningen

16. Oktober 1984
T-PA 526

0181495

14

Patentansprüche
----------------

1. Plattenspieler mit einem radial oder tangential abtastenden Tonarm für die Abtastung von Schallplatten,
deren vertikaler Aufzeichnungsspurwinkel $\alpha$ in verabredeten Grenzen liegen soll, dessen absoluter Wert aber
unbekannt ist, und wobei der Tonarm ein Abtastsystem
mit einem Wandler aufweist, das zur Erzeugung von Nutzsignalen elastisch  gelagerte und dadurch bewegliche
Abtastteile besitzt, d a d u r c h   g e k e n n -
z e i c h n e t, daß Mittel zur Bestimmung der Differenz $\alpha - \beta$  von Aufzeichnungsspurwinkel $\alpha$  und Abtastspurwinkel $\beta$  vorgesehen sind, die eine Spannung erzeugen,
die abhängig ist von der Longitudinalbewegung der bei
Nutzmodulation bewegten Abtastteile und angezeigt wird
und/oder eine Spurwinkelkorrektur ermöglicht.

2. Plattenspieler nach Anspruch 1, d a d u r c h   g e -
k e n n z e i c h n e t, daß zusätzlich zum Wandler für
die Nutzsignale im Abtastsystem ein Wandler für die Detektion der durch die Longitudinalbewegung erzeugten Spannung
vorgesehen ist, der vorzugsweise nach dem elektromagnetischen
oder piezoelektrischen Prinzip arbeitet.

3. Plattenspieler nach Anspruch 2, d a d u r c h   g e -
k e n n z e i c h n e t, daß ein amplitudenabhängig arbeitender Wandler zur Erzeugung der Longitudinalbewegungssignale
vorgesehen ist, daß der Gleichstromanteil der erzeugten
Longitudinalbewegungs-Spannung als Maß für die effektiv

Deutsche Thomson-Brandt GmbH
Postfach 2060
7730 Villingen-Schwenningen
0181495
16. Oktober 1984
T-PA 526

wirkende Auflagekraft des Abtasters verwendet wird,
weil eine kleine Komponente der senkrecht wirkenden
Auflagekraft des Abtasters sich longitudinal als
statische Kraftkomponente auswirkt und so eine Größe
zur Verfügung steht, die eine von der Auflagekraft
abhängige Spannung darstellt.

4. Plattenspieler nach Anpsruch 1, d a d u r c h   g e -
k e n n z e i c h n e t, daß bei Verwendung elektro-
magnetischer Abtastwandler, die für jeden Kanal mit einem
gleichwertigen Spulenpaar ausgerüstet sind,         mindestens eine Mittelanzapfung herausgeführt und durch
entsprechende phasenrichtige Zusammenschaltung eine
Trennung der Nutzspannungen von der durch die Longitudinalbewegung erzeugten Spannung bewirkt wird.

5. Plattenspieler gemäß Anspruch 1, d a d u r c h    g e -
k e n n z e i c h n e t, daß zur Erzielung einer Unabhängigkeit von den Modulationsamplituden und zur beruhigten Anzeige der drei Zustände $\alpha < \beta$, $\alpha = \beta$ und $\alpha > \beta$ eine
gleichartige Aufbereitung von Nutzsignalspannung und
Longitudinalbewegungsspannung nutzbar ist, indem über
Bandpaßmittel für etwa mittlere Frequenzen und anschliessende Mittel zur Digitalisierung digitale Signale erzeugt
werden, die mittels eines Gatters verknüpft werden und je
nach der Winkeldifferenz $\alpha - \beta$ unterschiedliche Pegel liefern,
und daß diese Signale über ein nachgeschaltetes Integrierglied von den stark schwankenden Modulationsfrequenzen
befreit werden, um den Phasensprung für das Kriterium
$\alpha = \beta$ deutlich erkennbar zu machen.

Deutsche Thomson-Brandt GmbH
Postfach 20 60
7730 Villingen-Schwenningen

16. Oktober 1984
T-PA 526

16

0181495

6. Plattenspieler gemäß Anspruch 1, d a d u r c h
   g e k e n n z e i c h n e t, daß zur Erzielung einer
   Unabhängigkeit von den Modulationsamplituden, auch
   sogar für den Fall von Intervall-Passagen des Nutzsignals bei Us = 0, und zur beruhigten Anzeige der
   drei Zustände $\alpha < \beta$, $\alpha = \beta$, und $\alpha > \beta$ eine gleichartige
   Aufbereitung von Nutzsignalspannung und Longitudinalbewegungsspannung nutzbar ist, indem über Bandpaßmittel
   für etwa mittlere Frequenzen und anschließende Mittel
   zur Digitalisierung digitale Signale erzeugt werden,
   die mittels eines Gatters verknüpft werden und je nach
   der Winkeldifferenz $\alpha - \beta$ unterschiedliche Pegel liefern,
   und daß diese Signale über eine Hold-Schaltung und ein
   nachgeschaltetes Integrierglied von den schwankenden
   Modulationen befreit werden, um den Phasensprung für
   das Kriterium $\alpha = \beta$ deutlich erkennbar zu machen.

Fig.2

Fig.1

Fig. 3

Fig. 4 a

Fig. 4 b

0181495
3/10

Fig.5

Fig.6

Fig. 7

Fig. 8

Fig.9

0181495

6/10

Fig. 10 a

Fig. 10 b

Fig. 10 c

Fig.11a

Fig.11b

Fig.11 c

Fig. 12a

Nutzspg. maximal (——→)
Long.-bew.-spg. = 0 (----→)

Fig. 12b

Long.-bew.-spg. maximal (----→)
Nutzspg. = 0 (——→)

Fig.13

Fig.14

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-3 490 771 (BENJAMIN BAUER) <br> * Spalte 1, Zeile 70 - Spalte 2, Zeile 50; Spalte 5, Zeile 58 - Spalte 6, Zeile 45; Figuren * | 1 | G 11 B 3/06 <br> G 11 B 3/12 |
| | --- | | |
| A | FR-A-2 411 461 (RAY DOLBY) <br> * Seite 35, Zeile 15 - Seite 37, Zeile 13; Figuren * | 2 | |
| | --- | | |
| A | FR-A-2 352 365 (PHILIPPE GORODETZKY) <br> * Seite 10, Zeilen 15-20; Seite 13, Zeilen 11-26; Figur 1 * | 3 | |
| | --- | | |
| A | AUDIO, Band 65, Nr. 3, März 1981, Seiten 21-25, Philadelphia, Pennsylvania, US; J. RISCH et al.: "More than one vertical tracking angle" <br> * Seiten 21 und 22; Figuren * | 1 | RECHERCHIERTE SACHGEBIETE (Int Cl 4) <br><br> G 11 B |
| | --- | | |
| A | AUDIO, Band 46, Nr. 11, November 1962, Seiten 21-24,88 und 89, Philadelphia, Pennsylvania, US; E.R. MARSDEN: "Vertical tracking angle - a source of IM distortion" <br> * Seiten 22 und 23; Figuren * | 1 | |
| | ----- | | |

Der vorliegende Recherchenbericht wurde für alle Patentansprüche erstellt

| Recherchenort <br> DEN HAAG | Abschlußdatum der Recherche <br> 13-02-1986 | Prüfer <br> DEVERGRANNE C.A. |
|---|---|---|